# EUROPEAN PATENT APPLICATION

(11) **EP 2 765 023 A2**
(43) Date of publication of application: **13.08.2014**
(21) Application number: 14154654.9
(22) Date of filing: 11.02.2014
(51) Int. Cl.: B60L 11/18

(54) **Inductive receiving device and method of operating a receiving device**

(30) Priority: 12.02.2013 GB 201302444
(71) Applicant: Bombardier Transportation GmbH, 10785 Berlin (DE)
(72) Inventor: Desjardins, Jeremie, 92400 Courbevoie (FR); Czainski, Robert, 71-032 Szczecin (PL); Halfmann, Christoph, 67454 Hassloch (DE); Geiger, Anton, 68309 Mannheim (DE)
(74) Representative: Patentanwälte Bressel und Partner mbB

(57) **Abstract**

The invention relates to a receiving device and a method of operating a receiving device of an inductive power transfer system for transferring power to a vehicle on a surface of a route (10), wherein the receiving device (1) comprises at least one air blowing unit (2a, 2b), wherein the air blowing unit (2a, 2b) is arranged and/or designed such that an air flow generated by the air blowing unit (2a, 2b) is directed at least partially into a volume (18) located below the receiving device (1), wherein a direction (27) of the air flow encloses a predetermined angle with a lower surface of the receiving device (1), wherein the angle is chosen from a range of 30° to 60°.

## Description

The invention relates to a receiving device of an inductive power transfer system, in particular an inductive power transfer system for transferring electric energy to a vehicle which is standing or travelling on a surface of a route. Furthermore, the invention relates to a method of operating said receiving device.

Vehicles, in particular electric vehicles, may comprise a so-called traction battery. The traction battery provides electric energy to power or to propel the vehicle. The electric energy stored in the traction battery can be dissipated by an electric machine which propels the electric vehicle. It is therefore necessary to charge the traction battery in order to provide sufficient electric energy to propel the electric vehicle.

Such vehicles may be provided with energy in different manners. One option is to charge an energy storage on-board the vehicle while the vehicle stops and by using an electric cable connection.

According to another option, the energy is transferred to the vehicle in a wireless manner using a magnetic field which induces an electric voltage in at least one inductance on-board the vehicle. The expression "receiving device" or "pick-up" has been used for the device which comprises at least one inductance. This approach can be used to charge the traction battery using an external source of electric energy, e.g. an external electrical network. For example, the aforementioned wireless manner uses a magnetic field to transfer electric energy to the vehicle, wherein an alternating voltage is induced on-board the vehicle. This alternating voltage has to be transformed such that a traction battery can be charged. In this case, an inductive power transfer system is used to transfer energy from a route side to the vehicle.

The inductive power transfer system usually comprises a route-sided primary unit with a primary winding structure. The primary winding structure generates a primary electromagnetic field which is received by a vehicle-sided receiving device which can be also referred to as secondary unit. In between the primary winding structure and a secondary winding structure of the receiving device, there is an air gap through which the primary field extends.

The inductive power transfer system can be a transfer system for so-called static energy transfer or static charging, wherein the vehicle to which the energy is transferred to does not move, i.e. is at a halt or rests. In this case, the primary unit can be designed as a so-called charging pad, wherein the charging pad is integrated into the route or mounted on the route surface (elevated charging pad).

A problem in such inductive power transfer systems is that it is generally not possible to mechanically prevent foreign objects, in particular objects made of metal, from being placed into proximity with the primary unit of an inductive power transfer system. Such foreign objects may e.g. be a coin, a can, a key, a tool or another object. The varying magnetic field generated by the primary unit and the secondary unit may induce current in the foreign objects made of metal and in other objects or fluids. Such currents may cause power losses and also heating of the object. Heating of the foreign objects may be dangerous for e.g. persons trying to touch and remove the foreign object and/or may damage the surface the foreign object is placed on or parts of the primary unit. Also, a heated object can cause fire.

It is an object of the present invention to provide a receiving device and a method of operating said receiving device improving the energy transfer to the vehicle and the operational safety of said energy transfer.

The present invention can be applied in particular to the field of inductive energy transfer to any land vehicle, in particular track bound vehicles, such as rail vehicles (e.g. trams), but also to road automobiles, such as individual (private) passenger cars or public transport vehicles (e.g. busses). A problem in such devices is that it is generally not possible to mechanically prevent foreign objects, in particular objects made of metal, from being placed into proximity of the primary unit of an inductive power transfer system. Such foreign objects may e.g. comprise a coin, a can, a key, and a tool and other objects. The varying magnetic field generated by the primary unit and a secondary unit may induce current in the foreign objects made of metal and in other objects or fluids. Such currents may cause power losses and heating of the object. Heating of the foreign objects may be dangerous for e.g. persons trying to touch and remove the foreign object and/or may damage the surface the foreign object is placed on or parts of the primary unit. Also, a heated object can cause fire.

The secondary winding structure can generate a secondary field, e.g. if a current flows in the secondary winding structure. The current can e.g. be generated at least partially by the mutual induction between the primary winding structure and the secondary winding structure. The superposition of both fields, the primary and the secondary field, is called total power transfer field.

It a basic idea of the present invention to arrange an air blowing unit at the receiving device by which foreign objects located under a lower surface of the receiving device can be removed by an airflow. The lower surface can also be referred to as surface of a bottom side of the receiving device, in particular of its housing.

A receiving device of an inductive power transfer system for transferring power to a vehicle on a surface of a route is proposed. The receiving device comprises a secondary winding structure for receiving an electromagnetic field which is generated by the previously described route-sided primary winding structure. Furthermore, the receiving device can comprise a rectifier for rectifying the induced alternating voltage.

The receiving device can be arranged at a bottom side of the vehicle. Furthermore, the receiving device can comprise a housing, wherein the aforementioned elements of the receiving device, in particular the secondary winding structure, are arranged within the housing. The lower surface of the housing can be oriented towards the surface of the route.

Furthermore, the receiving device comprises at least one air blowing unit. The air blowing unit can be also referred to as air knife. The air blowing unit is arranged and/or designed such that an air flow generated by the air blowing unit is directed at least partially into a volume located below the receiving device.

The air flow denotes an output air flow which can be directed through at least one outlet of the air blowing unit. The air blowing unit can have more than one outlet. It is, of course, possible that the proposed receiving device comprises more than one air blowing unit.

In the context of this invention, a longitudinal axis of the receiving device is an axis which is directed into a longitudinal direction, wherein the longitudinal direction can be oriented parallel to a longitudinal axis of the vehicle and/or parallel to a direction of travel if the vehicle travels straight forward. The longitudinal axis can be parallel to a so-called roll axis of the vehicle. The longitudinal axis can also be parallel to a longitudinal axis of the secondary winding structure of the receiving device, wherein the winding structure or parts of the winding structure extend in this longitudinal direction. A vertical axis of the receiving device is an axis which is directed into a vertical direction, wherein the vertical direction can be oriented parallel to a yaw axis of the vehicle and/or oriented perpendicular to a plane surface of the route on which the vehicle comprising the proposed receiving device stands or travels. The vertical direction can also denote a main direction of the total power transfer field which extends through the secondary winding structure of the receiving device. The vertical axis is oriented perpendicular to the aforementioned longitudinal axis. Correspondingly, a lateral axis of the receiving device is an axis which is directed into a lateral direction, wherein the lateral direction is oriented perpendicular to the aforementioned longitudinal direction within a plane perpendicular to the aforementioned vertical direction. Also, the lateral axis can be parallel to a so-called pitch axis of the vehicle.

The longitudinal axis, the vertical axis and the lateral axis define a right-handed coordinate system. The term "below" means that the volume is located in an interspace between the surface of the route and the vehicle-sided receiving device. In other words, the volume into which the air flow is at least partially directed is, with respect to the aforementioned vertical direction, located below or under the lower surface of the receiving device, in particular the housing of the receiving device.

The volume can have a length which is equal to a length of the housing of the receiving device, wherein the length is a dimension along the longitudinal axis. Correspondingly, the volume can have a width which is equal to a width of the housing of the receiving device, wherein the width is a dimension along the lateral axis. Furthermore, the volume can have a height equal to the distance from the surface of the route to the receiving device, in particular to the lower surface of the housing of the receiving device.

This means, that the air flow is directed from the vehicle-sided receiving device towards the surface of the route. This advantageously allows blowing away foreign objects placed or located on the surface of the route by means of the air flow or air stream. As a consequence of such a removal, the efficiency of the inductive power transfer and the operational safety during the inductive power transfer is enhanced.

According to the invention, a direction of the air flow encloses a predetermined angle with the lower surface of the receiving device, in particular the bottom side surface of the housing of the receiving device. The said angle can be defined within a plane perpendicular to the aforementioned longitudinal axis. The angle is chosen from a range of 30 ° to 60°.

The angle can also be chosen from a range of 0° to 90°. More preferably, the angle can be chosen from a range from 40° to 50°. In this context, an angle of 0° means that the air flow is directed exclusively along the lateral axis, wherein an angle of 90° is directed exclusively along the vertical axis.

The receiving device can also comprise an angular positioning means by which the said angle is adjustable. In particular, in the case that the receiving device is movable along the vertical axis, which will be explained later, the angle can be adjusted depending on a current distance between the surface of the route and the receiving device, in particular the bottom side surface of the housing of the receiving device.

The angle can be chosen or adjusted such that an effective removal of a foreign object by means of the air flow is possible. It is, for example, desirable that the angle is chosen such that the air flow is directed towards a foreign object, wherein the aforementioned lateral part of the air flow is as high as possible. If the foreign object is to be removed to a lateral side, i.e. in a predetermined lateral direction, the angle can be chosen such that the air flow is directed to a volume located ahead of the foreign object with respect to the removal direction, wherein the lateral part is as high as possible.

This advantageously allows an efficient, reliable and fast removal of the foreign object.

In another embodiment, a direction of the air flow is oriented perpendicular to the aforementioned longitudinal axis of the receiving device if projected into a plane perpendicular to the aforementioned vertical axis of the receiving device. In other words, the direction of the air flow only comprises a lateral part which is directed along the aforementioned lateral axis and a vertical part which is directed along the aforementioned vertical axis. The direction of the air flow does not comprise a longitudinal part which is directed along the longitudinal axis.

This advantageously allows removing a foreign object laterally with respect to the vehicle. In this way, the foreign object can be removed effectively from a charging area e.g. a charging pad or a path of travel of the vehicle which, in turn, improves the charging conditions for subsequent charging processes of e.g. other vehicles.

In another embodiment, at least one air outlet of the air blowing unit is designed as a groove.

In another embodiment, at least one air outlet of the air blowing unit is designed as a groove which extends parallel to the longitudinal axis. The groove can have a predetermined length (along the longitudinal axis) and a predetermined width.

Alternatively, the at least one air outlet of the air blowing unit is designed as a groove which extends parallel to the lateral axis. The groove can have a predetermined length (along the lateral axis) and a predetermined width. The groove can e.g. be arranged or extend along a lateral side of the receiving device, wherein the lateral side extends along the lateral axis. In particular, the groove can be arranged at the front end of the receiving device. It is, of course, also possible to arrange the groove at the rear end of the receiving device. For example, the air blowing unit can be arranged adjacent to the front end or rear end of the housing of the receiving device with respect to the longitudinal axis.

It is possible that at least one air outlet is designed as a groove which extends parallel to the longitudinal axis and another air outlet is designed as a groove which extends parallel to the lateral axis.

Such a design of the air outlet advantageously allows a uniform, laminar and constant air flow covering a large part of the volume located in the aforementioned interspace between the surface of the route and the receiving device.

In a preferred embodiment, the air blowing unit is arranged on or extends along a longitudinal side of the receiving device. In particular, the air blowing unit can be arranged at a longitudinal side of the housing of the receiving device, wherein the longitudinal side extends along the longitudinal axis. For example, the air blowing unit can be arranged adjacent to the housing of the receiving device with respect to the lateral axis. Such an arrangement of the air blowing unit advantageously allows directing the air flow into the said volume with the previously described direction.

Further, the receiving device can comprise an air compressing unit, wherein the air compressing unit is fluidically coupled to the air blowing unit. Fluidically coupled means that fluid can be transferred from the air compressing unit to the air blowing unit, e.g. by connecting means such as one or more hoses or pipes. The air compressing unit provides an air source for the air blowing unit. The air compressing unit can be arranged within the housing of the receiving device or outside the housing. Furthermore, the air compressing unit can be connected to the air blowing unit via guiding or connecting means such as pipes or hoses.

This advantageously provides air with a predetermined pressure for operating the air blowing unit.

Further, the receiving device can comprise at least one fluid reservoir, wherein the fluid reservoir is fluidically coupled to the air blowing unit. In particular, the fluid reservoir can be arranged in a fluid path between the fluid compressing unit and the air blowing unit. The fluid reservoir can be designed as a vessel. Furthermore, the fluid reservoir can have a predetermined volume. This advantageously allows storing a predetermined volume of air with a predetermined pressure. Thus, the air blowing unit can be operated with the stored air for at least a desired time of operation with a desired pressure. Also, the aforementioned storage of air allows an instant operation of the air blowing unit as air with a desired operational pressure is provided by the reservoir and an air compressing unit does not have to be operated before air with an operational pressure is provided.

Further, the receiving device can comprise at least one fluid valve, wherein the air flow is controllable by the fluid valve. The fluid valve can e.g. be arranged in a fluid path connecting the aforementioned fluid reservoir and the air blowing unit. Another fluid valve can be arranged between the aforementioned fluid path connecting the fluid compressing unit and the fluid reservoir.

Operating such a valve advantageously allows controlling the air flow, in particular to switch the air flow on or off.

In another embodiment, the receiving device comprises at least one lifting means, wherein at least one part of the receiving device is movable along the vertical axis by operating said lifting means. The air blowing unit is arranged at the movable part of the receiving device.

By moving the receiving device at least partially along the vertical axis, a size of an air gap between e.g. the route-sided primary winding structure and the vehicle-sided secondary winding structure can be adjusted. It can be desirable to have a constant distance or nearly constant distance between the primary and the secondary winding structure in order to provide constant or nearly constant parameters during inductive power transfer. If the distance from the surface of the route to the vehicle varies, e.g. due to elevations or deepenings of the route, the distance between the primary and the secondary winding structure may vary as well. By moving the receiving device or part of the receiving device along the vertical axis, such variations of the air gap can be compensated for. This enhances characteristics of the inductive power transfer.

Arranging the air blowing unit at the movable part of the receiving device advantageously allows improving the removal of foreign objects. In the case of static charging, the receiving device can be located above a charging pad which comprises the primary winding structure. Then, the receiving device can be lowered towards the charging pad (or a top surface of the charging pad) until a predetermined (small) distance between the charging pad and the receiving device is reached. As the air blowing unit is arranged at the movable part of the receiving device, it is also positioned closer to the surface of the charging pad. Thus, a removal force which is exerted by the air flow on a foreign object located on the surface of the charging pad can be increased. This, in turn, improves the removal process.

In another embodiment, the receiving device comprises a detection system or is coupled to a detection system for detecting a foreign object on the surface of the route. The air flow is controllable depending on an output signal of the detection system.

The detection system can be designed such that a foreign object can be detected in a surveillance area or surveillance volume which can be part of, equal to or comprise the volume into which the air flow can be directed. An output signal of the detection system can represent a first status in which a foreign object is located within a surveillance area or a second status in which no foreign object is located within a surveillance area.

Additionally, such an output signal can represent a location of the foreign object within the said surveillance area or volume. Moreover, it is possible that the output signal represents a size or a dimension of the foreign object located within the surveillance area or volume.

Depending on the output signal or the information coded by said output signal, a direction of the air flow, a pressure of the air flow, a velocity of the air flow or other characteristics of the air flow can be adjusted.

If the receiving device comprises more than one air blowing unit or if the air blowing unit comprises more than one outlet, only selected air blowing units and/or outlets can be activated, wherein an air flow generated by said selected air blowing unit(s) and/or selected outlet(s) is directed towards a sub-volume of the surveillance area or surveillance volume in which the foreign objected is located. This advantageously allows a targeted removal of a detected foreign object which, in turn, saves energy needed during the removal.

In another embodiment, the detection system comprises at least one inductive or capacitive sensing system.

The detection system can e.g. comprise at least one inductive sensing system, wherein the inductive sensing system comprises one or multiple detection winding(s). Multiple detection windings can be arranged in an array structure, wherein the array structure covers a charging surface of the route at least partially. The charging surface can be a subpart of the surface of the route through which the primary field or a predetermined portion, e.g. a portion larger than 80%, 90% or 95%, of the primary field extends during inductive power transfer, in particular during static charging.

Using an inductive detection system, an active or passive detection can be realized. In the case of an active detection, one or more excitation winding(s) is/are used. An active object detection is performed by monitoring changes of properties of an excitation field generated by the excitation winding(s). In the case of a passive detection, only one or more passive winding(s) is/are used. The passive object detection is performed by monitoring changes of properties of the passive winding(s), in particular an inductance of the winding(s).

Such an inductive detection system is disclosed in GB 1222712.0 (not yet published). In the context of this invention, a detection system can be designed according to one of the embodiments claimed in GB 1222712.0.

In the case of a capacitive detection, the detection system can comprise at least one capacitive sensing system, wherein the capacitive sensing system comprises one or multiple detection capacitors. Multiple detection capacitors can be are arranged in an array structure, wherein the array structure covers the charging surface at least partially. Using a passive detection system, a passive object detection is performed by monitoring changes of properties of the detection capacitor(s), in particular a capacitance of the detection capacitor(s).

Such a capacitive detection system is disclosed in the GB 1222713.8 (not yet published). In the context of this invention, a detection system can be designed according to one of the embodiments claimed in GB 1222713.8.

In another embodiment, the receiving device comprises at least one image capturing device, e.g. a camera. The image capturing device is arranged and/or designed such that an observation area or volume of the image capturing device covers the volume located below the receiving device at least partially. Output signals of the image capturing device can be transferred to a display for displaying visual information of said volume to a driver or another passenger of the vehicle. This advantageously allows observing the volume located below the receiving device.

It is of course possible that the image capturing device is a part of the aforementioned detection system. In this case, the detection system can be an optical detection system.

Further proposed is a method of operating a receiving device of an inductive power transfer system for transferring power to a vehicle on a surface of a route.

The receiving device comprises at least one air blowing unit according to one of the previously described embodiments. The air blowing unit is controlled such that an air flow with predetermined characteristics is directed into the volume located below the receiving device. Characteristics of the air flow can comprise a direction, a pressure, a velocity and/or other characteristics of the air flow.

According to the invention, a direction of the air flow encloses a predetermined angle with a lower surface of the receiving device, wherein the angle is chosen from a range of 30 ° to 60°.

The proposed method advantageously allows improving the efficiency and operational safety of the inductive power transfer, in particular static charging of the vehicle.

In another embodiment, a direction of the air flow and/or a flow rate of the air flow is adjusted. This advantageously allows adjusting characteristics of the air flow in order to provide an efficient removal of the foreign object.

In another embodiment, the air flow is activated before the beginning of the inductive power transfer. In particular, the air flow can be activated for a predetermined time interval, e.g. 2 to 4 seconds. Activating the air flow before the beginning of inductive power transfer, e.g. before energizing the primary winding structure advantageously allows removing a foreign object before the electromagnetic field for inductive power transfer is generated.

In another embodiment, the receiving device comprises multiple air blowing units and/or the at least one air blowing unit comprises multiple air outlets, wherein only selected air blowing units and/or outlets are activated. As previously described, this advantageously allows generating a targeted air flow which further improves the removal of a foreign object by the means of the air flow.

In another embodiment, a surveillance area or surveillance volume is monitored, wherein the at least one air blowing unit is only activated if a foreign object is detected within the surveillance area or volume. The surveillance area or volume can be monitored by the previously described detection system.

This advantageously allows saving energy as an air flow is not generated if no foreign object is detected.

Alternatively, it is possible to activate the air blowing unit before each beginning of an inductive power transfer, i.e. independent of a foreign object detection.

In another embodiment, a location of the foreign object is detected, wherein only selected air blowing unit(s) and/or only selected air outlet(s) is/are activated, wherein the air flow generated by the selected air blowing unit(s) and/or air outlet(s) is at least partially directed into an object volume comprising the foreign object. In this context, the object volume can be a spherical or block-shaped volume with minimal dimensions, e.g. a minimal radius, which fully comprises the foreign object.

As explained previously, this allows the generation of a targeted air flow which, in turn, reduces the energy to generate the air flow by which the foreign object is removed.

Further described is a method of manufacturing a receiving device of an inductive power transfer system for transferring power to a vehicle on a surface of a route.

The method comprises the following steps:
- providing a receiving device of an inductive power transfer system,
- providing at least one air blowing unit,
- arranging and/or designing the air blowing unit such that an air flow generated by the air blowing unit is directed at least partially into a volume located below the receiving device, wherein a direction of the air flow encloses a predetermined angle with a lower surface of the receiving device, wherein the angle is chosen from a range of 30° to 60°.

This advantageously provides a method of manufacturing the previously described receiving device by which foreign objects can be removed efficiently which, in turn, enhances the efficiency and operational safety of the inductive power transfer conducted by said receiving device.

Further described is a vehicle, in particular an electric vehicle.

The vehicle can comprise a receiving device according to one of the previously described embodiments of the receiving device.

Also described is an inductive power transfer system comprising a receiving device according to one of the previously described embodiments and a primary unit which comprises the primary winding structure. The primary unit can have a top surface or charging surface which is provided by said primary winding structure or under which the said primary winding structure is arranged. In this case, the air flow can be directed from the receiving device towards the primary unit, in particular from a bottom side surface of the receiving device or a housing of the receiving device towards the said top surface of the primary unit.

Examples of the invention will be described with references to the attached figures. The figures show:
Fig.1 a schematic block diagram of fluid connections of elements of a proposed
   receiving unit,
Fig. 2 a perspective view of a proposed receiving unit,
Fig. 3 a detailed view of the receiving device shown in Fig. 2,
Fig. 4 a front view of the receiving device shown in Fig. 2,
Fig. 5 a perspective view of another receiving device, and
Fig. 6 a schematic arrangement of a receiving device and a primary unit.

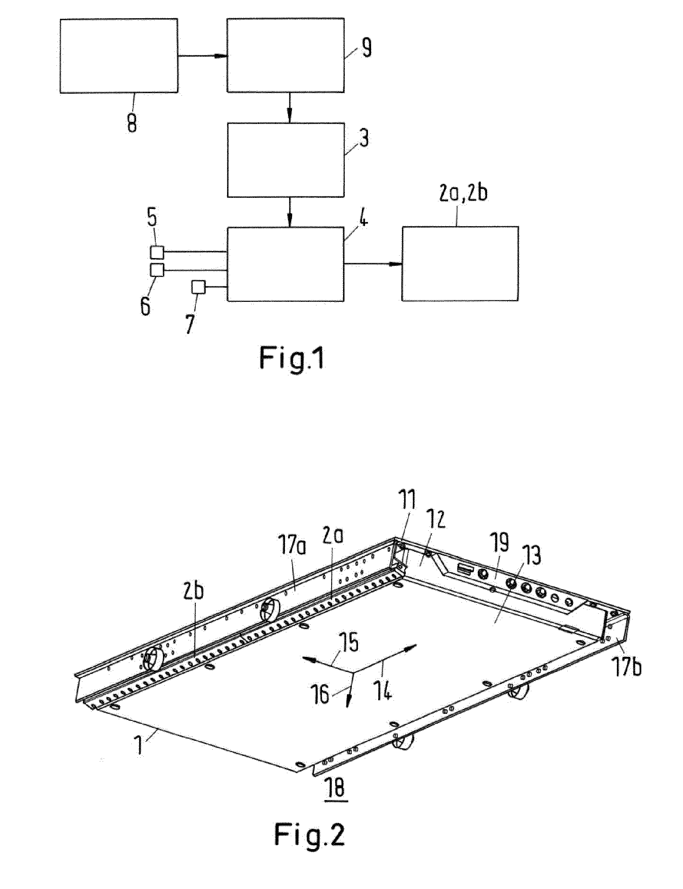

Fig. 1 shows a schematic block diagram of elements of a receiving device 1 (see e.g. Fig. 2) and their fluid connections. Shown are two air blowing units 2a, 2b which are, for the sake of simplicity, symbolized by one block. The air blowing units 2a, 2b are fluidically connected to a vessel 3 which comprises a fluid volume of e.g. 30 liter at an operational pressure of e.g. 8 to 10 bar. Within the fluid connection of the air blowing units 2a, 2b and the vessel 3, a magnetic valve 4 is arranged which controls the fluid flow from the vessel 3 to the air blowing units 2a, 2b. In particular, the magnetic valve 4 switches a fluid flow on or off. The magnetic valve 4 is connected to a board network 5 which supplies e.g. an operation voltage of 24V. Furthermore, the magnetic valve 4 is connected to a terminal 6 which provides a ground level. Furthermore, the magnetic valve 4 is connected to a control unit 7 which controls the operation of the magnetic valve 4. The vessel 3 is fluidically connected to an air compressing unit 8 via a back pressure valve 9. The air compressing unit 8 can be operated such that the operational pressure from 8 to 10 bar is provided. The fluid connections between the elements 2a, 2b, 3, 4, 8, 9 can be provided by flexible tubes, e.g. with a diameter of 13mm.

The air vessel 3 can comprise a volume from 30 to 60 liter in order to store a large volume of air to operate the air blowing units 2a, 2b. The air compressing unit 8 can charge the vessel 3, e.g. when the air blowing units 2a, 2b are not in use.

The magnetic valve 4 should be located as close as possible to the air blowing units 2a, 2b, e.g. with a predetermined distance from the air blowing units 2a, 2b. Also, the vessel 3 should be located with a distance of less than 1 m from the air blowing units 2a, 2b. A bending radius of the flexible tubes should be larger than a minimal bending radius of e.g. 30mm.

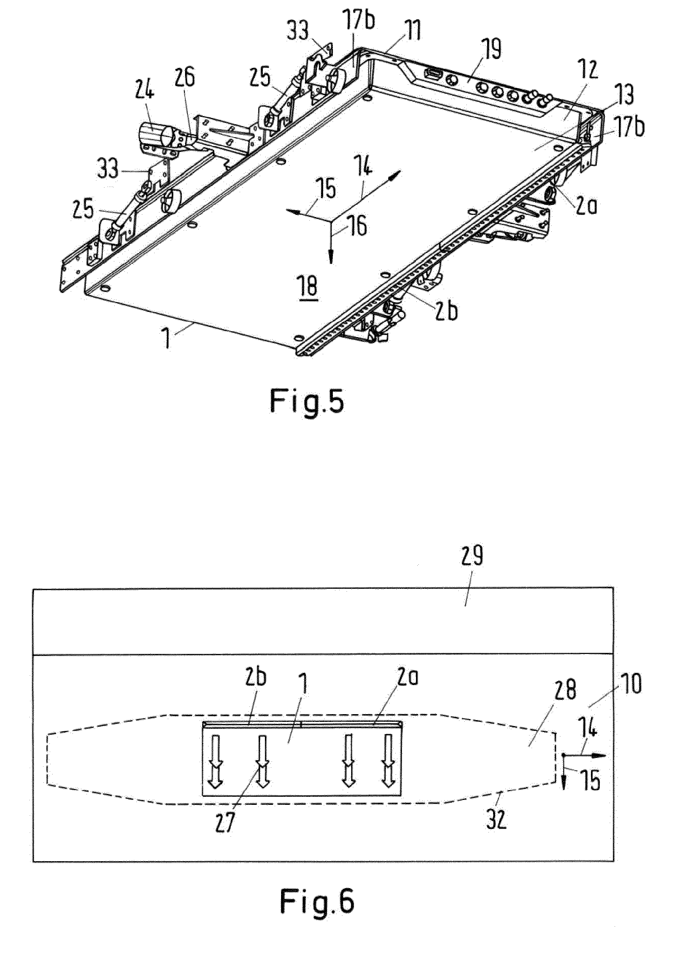

In Fig. 2, a perspective view of a proposed receiving device 1 is shown. The receiving device 1 serves for an inductive power transfer system for transferring power to a vehicle (not shown) which stands or travels on a surface of a route 10 (see Fig. 6). The receiving device 1 comprises a base plate 11 which can be mechanically connected to the vehicle, in particular to a bottom side of the vehicle which is oriented towards the surface of the route 10. Also shown is a housing 12 of the receiving device 1. Within the housing 12, a secondary winding structure (not shown) can be arranged. Also other elements of the receiving device 1, such as a ferrite arrangement, a rectifier, a cooling system or further elements can be arranged within the housing 12. The housing 12 has a bottom side surface 13 (or lower surface) which faces the surface of the route 10 if the receiving device 1 is attached (via the base plate 11) to the bottom side of the vehicle.

In Fig. 2, a coordinate system provided by a longitudinal axis 14, a lateral axis 15 and a vertical axis 16 is shown. The housing 12 has a predetermined length extending along the longitudinal axis 14, which is larger than a width of the housing 12 which extends along the lateral axis 15. The receiving device 1 also comprises two side bars 17a, 17b. If looking into the direction of the longitudinal axis 14 (longitudinal direction which is symbolized by the arrowhead of the arrow representing the longitudinal axis 14) the lateral side bar 17a can be defined as right side bar 17a, wherein the lateral side bar 17b can be defined as left side bar 17b. The side bars 17a, 17b are attached to the base plate 11 and arranged in planes perpendicular to the lateral axis 15. It is shown that the side bars 17a, 17b are spaced with a predetermined distance in a lateral direction from side walls of the housing 12 which extend parallel to the longitudinal axis 14. On a, with respect to a vertical direction (which is symbolized by the arrowhead of the arrow symbolizing the vertical axis 16), lower end of the right side bar 17a, two air blowing units 2a, 2b are arranged. The air blowing units 2a, 2b are mechanically fixed to the right side bar 17a.

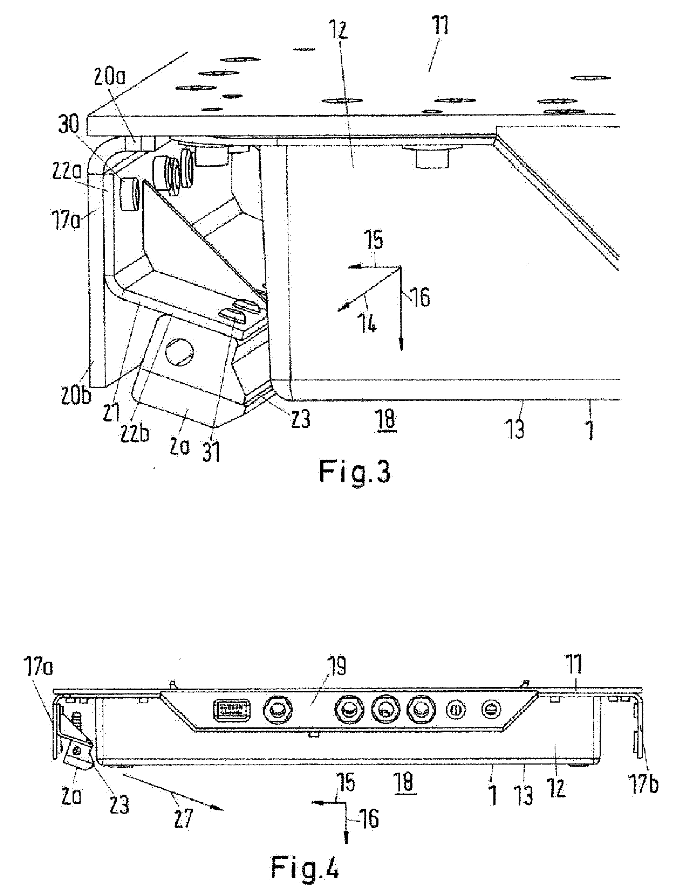

As shown in Fig. 3, the air blowing units 2a, 2b which can also be referred to as air knifes, are attached to the right side bar 17a such that an air flow generated by these air blowing units 2a, 2b is directed into a volume 18 which is located, with respect to the vertical direction, below the bottom side surface 13 of the housing 12 of the receiving device 1. Also shown is a port arrangement 19, which will be explained with respect to Fig. 5 in more detail.

In Fig. 3, a detailed view of the receiving device 1 shown in Fig. 2 is shown. It is shown that the right side bar 17a is L-shaped in a cross section in a section plane which is perpendicular to the longitudinal axis 14. A first leg 20a of the right side bar 17a is attached to the base plate 11. The other leg 20b of the right side bar 17a extends in the vertical direction. The air blowing units 2a, 2b are mechanically fixed to a connecting element 21. The connecting element 21 comprises also a first leg 22a and a second leg 22b, wherein the first and the second leg 22a, 22b enclose a predetermined angle in a section plane which is perpendicular to the longitudinal axis 14. The first leg 22a of the connecting element 21 extends in the vertical direction and is mechanically fixed to the second leg 20b of the right side bar 17a, e.g. via screws 30. The second leg 22b of the connecting element 21 extends into an interspace between the second leg 20b of the right side bar 17a and an adjacent side wall of the housing 12. The air blowing units 2a, 2b are mechanically fixed to said second leg 22b of the connecting element 21, e.g. via screws 31.

It is shown that each air blowing unit 2a, 2b provides an outlet 23 which is designed as a groove. An air flow which is guided by side walls of said groove 23 is directed into the volume 18 located below the receiving device 1. The outlet 23 extends along the longitudinal axis 14. With respect to a section plane which is oriented perpendicular to the longitudinal axis 14, a direction 27 of the air flow (see Fig. 4) through the outlet 23 is parallel to direction of extension of the second leg 22b of the connecting element 21 from the right side bar 17a towards the adjacent side wall of the housing 12 of the receiving device 1.

With respect to the configuration shown in Fig. 3, the direction 27 of the air flow through the outlet 23 can be adjusted by adjusting the angle enclosed by the first and the second leg 22a, 22b of the connecting element 21.

In Fig. 4, a front view of the receiving device 1 shown in Fig. 2 is shown. In particular, a port terminal 19 is shown which is arranged at a front side of the receiving device 1, in particular the housing 12 of the receiving device 1. The terminal 19 provides ports for the electrical connections of the receiving device 1 as well as for communication means and cooling means.

Also shown is a direction 27 of an air flow through the outlet 23 of the air blowing units 2a, 2b (see Fig. 2). It is shown that the air flow 27 exclusively extends in a plane which is oriented perpendicular to the longitudinal axis 14. This means, that the air flow 27 has a lateral part and a vertical part but no longitudinal part.

In Fig. 5, a perspective view of another receiving device 1 is shown. In contrast to the receiving device 1 shown in Fig. 2, the air blowing units 2a, 2b are attached to the left side bar 17b.

Furthermore, the receiving device 1 comprises lifting means for moving the receiving device 1 along the vertical axis 16. The receiving device 1 comprises mounting portions 33 to be mounted on a vehicle. Also, the receiving device comprises two actuators 24, wherein only one actuator 24 is shown in Fig. 5. The actuators 24 are used for actuating a movement of the receiving device 1 relative to the mounting portions 33. The mounting portions 33 and a movable part of the receiving device 1 are moveably connected to each other by at least one connecting portion 25. The connecting portions 25 are connected to the mounting portions 33, e.g. via a ball joint. Also, the connecting portions 25 are connected to the movable part of the receiving device 1, e.g. also via a ball joint. The actuators 24 can be actuated such that the movable part is moved in a vertical direction.

In particular, the actuators 24 each comprise a prolongable section 26 which can be prolonged and shortened by operating the respective actuator 24. In particular, the actuators 24 can be designed as linear actuators. The movement of the movable part of the receiving device 1 in the vertical direction is effected by varying the rate of extension and/or the direction of movement of the prolongable sections 26.

By operating the actuators 24, the movable part of the receiving device 1 can be lowered towards a surface of a route 10 (see Fig. 6). The air blowing units 2a, 2b can be operated during the lowering process. In this case, air is blown towards different regions of the surface of the route 10 during the lowering process.

In Fig. 6, a schematic overview of a system for inductive power transfer comprising a receiving device 1 and a primary unit 28 is shown. The system comprises the primary unit 28 which is arranged underneath a surface of a route 10. The primary unit comprises a primary winding structure wherein only an envelope 32 of the primary winding structure is shown. The primary winding structure generates an electromagnetic power transfer field if energized e.g. by a wayside power converter. The receiving device 1, in particular the secondary winding structure of the receiving device 1 receives the power transfer field and generates an alternating current. Shown are two air blowing units 2a, 2b which are arranged on the receiving device 1 and a direction 27 of an air flow. It can be seen that the air flow 27 is exclusively oriented along the lateral axis 15 if projected into a plane which is oriented perpendicular to the vertical axis 16 (see Fig. 2). Also shown is a passenger waiting zone 29 arranged adjacent to the envelope 32. The projection of the envelope 32 of the primary winding structure on the surface of the route 10 can provide a charging surface of a charging pad.

## Claims

1. A receiving device of an inductive power transfer system for transferring power to a vehicle on a surface of a route (10), wherein the receiving device (1) comprises at least one air blowing unit (2a, 2b), wherein the air blowing unit (2a, 2b) is arranged and/or designed such that an air flow generated by the air blowing unit (2a, 2b) is directed at least partially into a volume (18) located below the receiving device (1), **characterized in that**
a direction (27) of the air flow encloses a predetermined angle with a lower surface of the receiving device (1), wherein the angle is chosen from a range of 30° to 60°.

2. The receiving device of claim 1, wherein a direction (27) of the air flow is oriented perpendicular to a longitudinal axis (14) of the receiving device (1) if projected into a plane perpendicular to a vertical axis (16) of the receiving device.

3. The receiving device of one of the claims 1 to 2, wherein at least one air outlet (23) of the air blowing unit (2a, 2b) is designed as a groove.

4. The receiving device of claim 3, wherein the groove extends parallel to the longitudinal axis (14) or parallel to the lateral axis (15).

5. The receiving device of one of the claims 1 to 4, wherein the air blowing unit (2a, 2b) is arranged on a longitudinal side of the receiving device (1).

6. The receiving device of one of the claims 1 to 5, wherein the receiving device (1) comprises at least one lifting means, wherein at least one part of the receiving device (1) is movable along a vertical axis (16) of the receiving device (1), wherein the air blowing unit (2a, 2b) is arranged at the movable part of the receiving device (1).

7. The receiving device of one of the claims 1 to 6, wherein the receiving device (1) comprises a detection system or is coupled to a detection system for detecting a foreign object, wherein the air flow is controllable depending on an output signal of the detection system.

8. The receiving device according to claim 7, wherein the detection system comprises at least one inductive or capacitive sensing system.

9. The receiving device according to one of the claims 1 to 8, wherein the receiving device (1) comprises at least one image capturing device, wherein the image capturing device is arranged and/or designed such that an observation area of the image capturing device covers the volume (18) located below the receiving device (11) at least partially.

10. A method of operating a receiving device of an inductive power transfer system for transferring power to a vehicle on a surface of a route (10), wherein the receiving device (1) comprises at least one air blowing unit (2a, 2b), wherein the air blowing unit (2a, 2b) is arranged and/or designed such that an air flow generated by the air blowing unit (2a, 2b) is directed at least partially into a volume (18) located below the receiving device (1), wherein the air blowing unit (2a, 2b) is controlled such that an air flow with predetermined characteristics is directed into the volume (18) located below the receiving device (1),
**characterized in that**
a direction (27) of the air flow encloses a predetermined angle with a lower surface of the receiving device (1), wherein the angle is chosen from a range of 30° to 60°.

11. The method according to claim 10, wherein a direction (27) of the air flow is adjusted and/or a flow rate of the air flow is adjusted.

12. The method according to one of the claims 10 to 11, wherein the air flow is activated before a beginning of the inductive power transfer.

13. The method according to one of the claims 10 to 12, wherein the receiving device (1) comprises multiple air blowing units (2a, 2b) and/or the at least one air blowing unit (2a, 2b) comprises multiple air outlets (23), wherein only selected air blowing units (2a, 2b) and/or outlets (23) are activated.

14. The method according to one of the claims 10 to 13, wherein a surveillance area is monitored, wherein the at least one air blowing unit (2a, 2b) is only activated if a foreign object is detected within the surveillance area.

15. The method according to claim 14, wherein a location of the foreign object is detected, wherein only selected air blowing unit(s) (2a, 2b) and/or only selected outlet(s) (23) is/are activated, wherein the air flow generated by the selected air blowing unit(s) (2a, 2b) and/or outlet(s) (23) is/are at least partially directed into an object volume comprising the foreign object.
